# EUROPEAN PATENT APPLICATION

(11) **EP 1 849 654 A1**
(43) Date of publication of application: **31.10.2007**
(21) Application number: 07008196.3
(22) Date of filing: 23.04.2007
(51) Int. Cl.: B60R 9/04

(54) **Roof rail for vehicles**

(30) Priority: 26.04.2006 CZ 20060272
(71) Applicant: AC LAK , s.r.o., 46206 Liberec XXIII (CZ)
(72) Inventor: Böhm, Vladimír, 252 10 Mnísek pod brdy (CZ)
(74) Representative: Reichel, Pavel

(57) **Abstract**

A roof rail for attaching to a transport means, particularly to the roof of a car or boat, the basic element being a tubular profile (1), where each of its two ends is furnished with a fastening means for firm mounting connection to the roof of the transport means. This fastening means is part of a clamping member (8) firmly positioned at least partly inside the tubular profile (1) and consisting of two lengthwise parts joined at one of their ends by a stretching element, with the possibility of mutual swivelling by means of the opening motion of their arms at the opposite ends, until these two arms are in a position where they are propped firmly, opposite each other, against the inner walls of the tubular profile (1).

The two parts of the clamping member (8), the upper clamping part (3) and the lower clamping part (2), can consist of U-shaped profiles, turned so that their bases lie opposite each other and one of the two parts (2, 3), i.e. the inner part, is positioned with its side walls in the trough of the other part, i.e. the outer part. The two parts (2, 3) are furnished, roughly in the middle of their length, with a set of mutually rolling surfaces defining the place of the swivelling, whilst the junction of the two parts (2, 3) is situated at their ends which are designed for positioning in the tubular profile (1) in the direction of its open outer end. The rolling surfaces consist of the facing side walls of two rounded projections (4), and of the valley between them, formed in the base of the outer part, into which the correspondingly-shaped projections (7), formed on the side walls of the inner part, individually extend. The base of the upper clamping part (3) is furnished with an upwardly open socket (13) for the head (6) of the stretching bolt (5) forming the stretching element, which passes freely through the two parts (2, 3) and is furnished at its free end with a nut (16), whilst the junction of the two parts is furnished, in the stretched position of the two parts (2, 3), with an anti-release guard.

## Description

### Field of the invention

The invention involves a lengthwise roof rail for vehicles, particularly for cars and boats.

### Description of the prior art

The roof rails of vehicles ordinarily include two transverse rods which are fastened to two parallel, lengthwise rails arranged along the sides of the vehicle. These lengthwise rails consist of tubular profiles made of a light alloy, which are made for example by hydroforming or extrusion, and on their bent ends they are furnished with solid castings with attaching bolts. Also known are lengthwise roof rails where light flanged castings with attaching bolts are inserted into and fastened to the ends of the extruded profile. The disadvantage lies in their tendency to corrode, the possibility that the attaching bolt will pull out, and the expensive manufacturing equipment (moulds) required. These structural arrangements are described in a series of patent documents, for example in USA patents 6 592 176, 6 250 528, 6 378 747, 6 267 281, 6 158 637, 6 126 051, 6 089 427, 5 839 615, 5 893 499, 5 624 266, 5 617 981, 5 573 159, in DE 203 16 215, 103 36 901, EP 1 112 789 and others. The current structural solutions involve a high degree of manufacturing precision, coupled with high wastage and complicated working. Expenses are high in terms of the manufacturing equipment (moulds) for use in the hydroforming technology and, moreover, the whole surface of the tubular profile of the rail must subsequently be ground. The goal of the present invention is to create a lengthwise roof rail with high torsional rigidity, reduced weight and unlimited colour variability, while at the same time reducing the costs of the manufacturing equipment and tools.

### Summary of the invention

The subject of this invention is a roof rail for attaching to a transport means, particularly to the roof of a car or boat, the basic element being a tubular profile, where each of its two ends is furnished with a fastening means for firm mounting connection to the roof of the transport means. The basis of the invention lies in the fact that this fastening means is part of a clamping member firmly positioned at least partly inside the tubular profile and consisting of two lengthwise parts joined at one of their ends by a stretching element, with the possibility of mutual swivelling by means of the opening motion of their arms at the opposite ends, until these two arms are in a position where they are propped firmly, opposite each other, against the inner walls of the tubular profile. The tubular profile can advantageously have the same diameter along the whole of its length, thereby significantly reducing the manufacturing price.

The two parts of the clamping member, the upper clamping part and the lower clamping part, can consist of U-shaped profiles, turned so that their bases lie opposite each other and one of the two parts, i.e. the inner part, is positioned with its side walls in the trough of the other part, i.e. the outer part, where the two parts, are furnished, roughly in the middle of their length, with a set of mutually rolling surfaces defining the place of the swivelling, whilst the junction of the two parts is situated at their ends which are designed for positioning in the tubular profile in the direction of its open outer end. The rolling surfaces can consist of the facing side walls of two rounded projections, and of the valley between them, formed in the base of the outer part, into which the correspondingly-shaped projections, formed on the side walls of the inner part, individually extend.

Along the whole of its length, the roof rail is compact and has the same diameter, thus significantly reducing the cost of manufacture. It is made of homogeneous material and its weight is reduced. An advantage is its high torsional rigidity. Before tightening, the inserted fastening means on the two bent ends of the tubular profile are freely movable inside the tubular profile, making it possible during assembly to correct for possible manufacturing tolerances. The structural arrangement of the roof rail with fastening means involves lower costs for manufacturing equipment, with the result that even limited manufacturing series are economical and facilitate advantageous pricing conditions. The technical solution of the roof rail meets the requirements for increased resistance to corrosion and permits unlimited colour variability. The structure of the roof rail with fastening means according to this invention permits its mounting both from inside and, additionally, from outside the vehicle.

The base of the upper clamping part can advantageously be furnished with an upwardly open socket for the head of the stretching bolt forming the stretching element, which passes freely through the two parts and is furnished at its free end with a nut, whilst the junction of the two parts is furnished, in the stretched position of the two parts, with an anti-release guard. The upper clamping part, in the area of its junction with the lower clamping part, can be advantageously reduced in height at its end by means of an oblique surface through which its base passes into an embedded rounded cylindrical surface arranged across this upper clamping part, which forms a socket for the head of the stretching bolt of corresponding shape. This facilitates the insertion of the clamping member into the bent end of the tubular profile of the roof rail. The shaping of the head of the stretching bolt and of the embedded rounded cylindrical surface of the upper clamping part makes it possible to offset the mutual movement of the upper and lower clamping part during tightening of the stretching bolt and prevents the slewing of the head of this bolt.

The protruding threaded end of the stretching bolt serves as the fastening means for the firm mounting connection to the roof of the transport means.
A further mounting bolt with nut, situated in the end area of the lower clamping part beyond the stretching bolt and beyond the end of the upper clamping part, can pass freely through the base of the lower clamping part, in the direction of the open outer end of the tubular profile in the assembled position. The two parts of the clamping member can be fixed as a unit in the tubular profile with the ends continously bent and bevelled downwards so that the base of the lower clamping part, with at least one threaded part of the fastening element protruding, forms a surface for fitting to the roof of the transportation means, whilst the whole lower clamping part is concealed from above by the tubular profile.

For the embodiment of the roof rail adapted for supplementary mounting from the outside, the stretching element can consist of a stretching bolt passing freely through the base of the outer end of the lower clamping part so that its head is embedded in the base of the lower clamping part and its threaded end is guided in the tapped hole in the upper clamping part, whilst the fastening means for firm mounting connection to the roof of the transport means comprises at least one mounting bolt, situated to the side of the stretching bolt in whose axis are arranged the mounting through-openings in all the walls of the elements lying above them, that is of the upper clamping part, and of the tubular profile where the openings can be furnished with caps.

The tubular profile of the roof rail can be made of an aluminium alloy or reinforced plastic, the lower clamping part and the upper clamping part of deep-drawing sheet steel, whilst the projections are formed as bumps in the base of the lower clamping part. At least one of the two parts of the clamping member, the upper clamping part and/or the lower clamping part, has at least part of its outer surface in a shape corresponding to the inner surface of the tubular profile in the places where they are adjacent to one another in the assembled position. The contact surface of the connection of the mounting clamping member and of the tubular profile is thus increased and the reliability of the connection and the bearing capacity of the roof rail is thereby improved.

### Brief description of the drawings

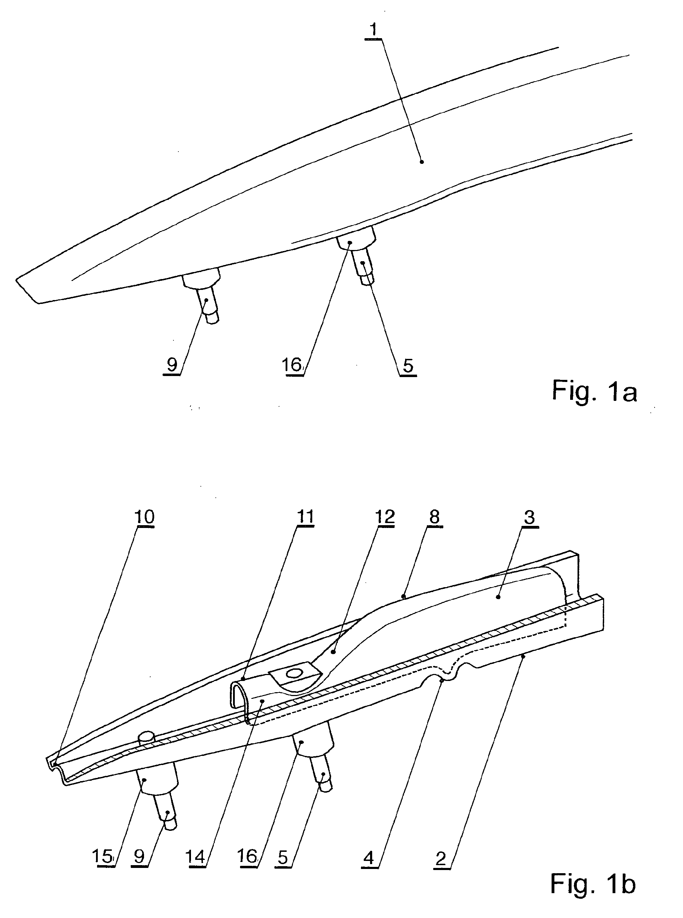

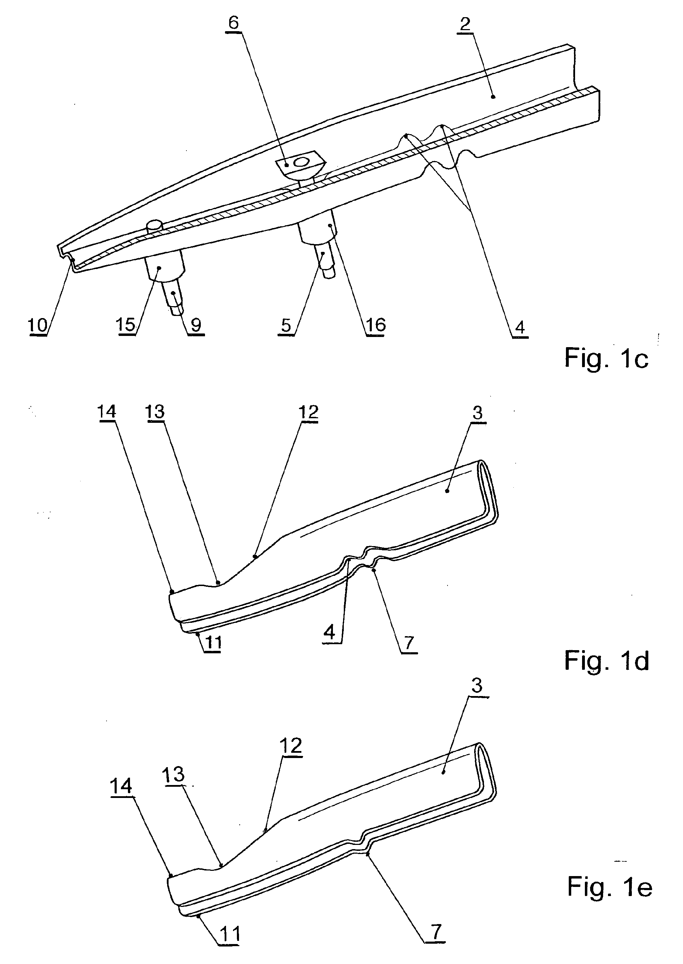

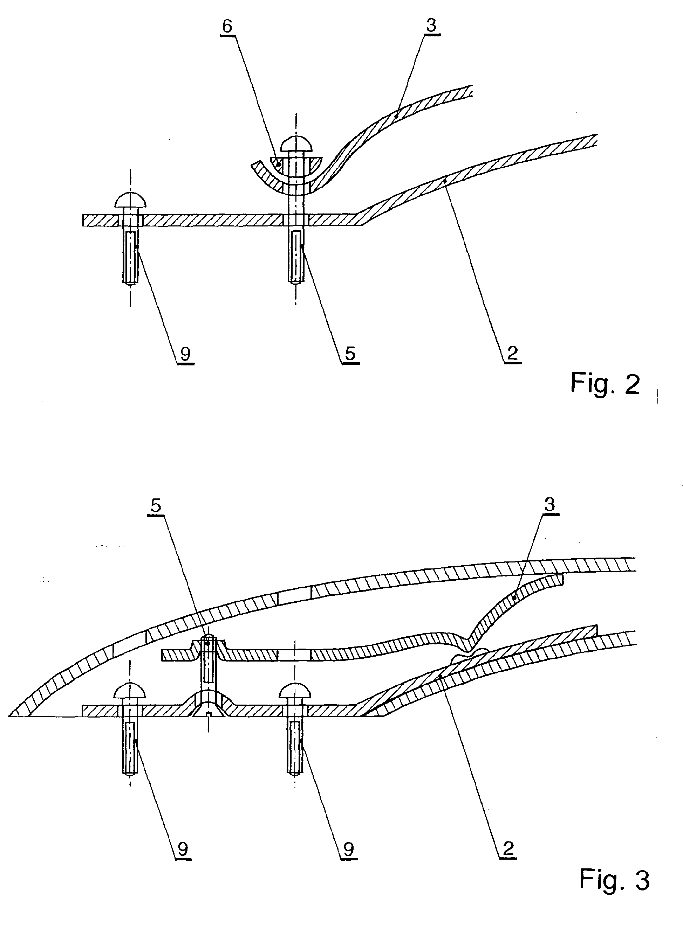

The invention is further explained with specific examples of some possible embodiments, by means of the attached drawings and the description that follows. Fig. 1 shows an example of an embodiment of the fastening means of the lengthwise roof rail for mounting from outside the car. Fig. I a shows one of the two bent ends of the tubular profile of the roof rail with inserted clamping member. Fig. I b consists of the two parts of the clamping member, Fig. 1c shows the lower part of the clamping member and Fig. ld shows the upper part of the clamping member. Fig. 2 is a schematic representation of a further embodiment of the clamping member for supplementary mounting of the roof rail from outside, the upper part of the clamping member is here only inserted under the head of the mounting bolt which is subsequently tightened from above, from the outside.

Fig. 3 shows a further possible example of an embodiment of the fastening means of the roof rail, for mounting from inside.

### Examples of preferred embodiments

The lengthwise roof rail comprises a closed extruded tubular profile 1 made of an aluminium alloy, which has the same diameter along the whole of its length and is bent and obliquely bevelled at both ends, so that the contact surfaces of its ends correspond in shape to the place of its fastening on the roof of the car. For the purposes of this application, the term "tubular profile" covers all closed profiles of a suitable diameter, for example circular, polygonal, of irregular shape etc. The inflexion of the tubular profile 1 can be executed between rolls, or by the technique of "stretch bending" where the profile is inflected in a prestressed state. The tubular profile 1 can be made, of course, from other materials, for example reinforced plastic. The tubular profile 1 of the roof rail can be furnished along its length with one or more supporting feet of suitable profile, made from the same material (not shown). Each of the two bent ends of the tubular profile 1 of the roof rail is furnished with fastening means for firm mounting connection to the roof of the vehicle. This fastening means is part of a clamping member 8 firmly positioned partly inside the tubular profile 1 and consisting of two lengthwise parts joined at one of their ends by a stretching element (for example by a stretching bolt 5), with the possibility of mutual swivelling by means of the opening motion of their arms at the opposite ends, until these two arms are in a position where they are propped firmly, opposite each other, against the inner walls of the tubular profile 1. These two parts are made by stamping, from deep-drawing sheet steel, or are made of injected plastic with filler, for example polyamide with glass or kevlar fibres.

The two parts of the clamping member 8, the upper clamping part 3 and the lower clamping part 2, consist of U-shaped profiles, turned so that their bases lie opposite each other and one of the two parts 2, 3 , i.e. the inner part, is positioned with its side walls in the trough of the other part, i.e. the outer part. The two parts 2, 3 are furnished, roughly in the middle of their length, with a set of mutually rolling surfaces defining the place of their mutual swivelling, whilst the junction of the two parts 2, 3 is situated at their ends which are designed for positioning in the tubular profile 1 in the direction of its open outer end. The rolling surfaces consist of the facing side walls of two rounded projections 4, and of the valley between them, formed in the base of the outer part (in the drawings, in the base of the lower clamping part 2) into which the correspondingly-shaped projections 7, formed on the side walls of the inner part (in the drawings, in the side walls of the upper clamping part 3), individually extend.

The base of the upper clamping part 3 is furnished with an upwardly open socket 13 for the head of the stretching bolt 5 forming the stretching element, which passes freely through the two parts 2, 3 and is furnished at its free end with a nut 16. The junction of the two parts 2, 3 is furnished, in the stretched position of these parts, with an anti-release guard. The upper clamping part 3, in the area of its junction with the lower clamping part 2, is reduced in height at its end by means of an oblique surface 12 through which its base passes into an embedded rounded cylindrical surface arranged across this upper clamping part 3. This embedded rounded cylindrical surface forms a socket 13 for the head 6 of the stretching bolt 5 of corresponding shape. The protruding threaded end of the stretching bolt 5 is used as the fastening means for the subsequent firm mounting connection of the tubular profile 1 to the roof of the transport means. A further mounting bolt 9 with nut 15, situated in the end area of the lower clamping part 2 beyond the stretching bolt 5 and beyond the end of the upper clamping part 3, freely passes through the base of the lower clamping part 2, in the direction of the open outer end of the tubular profile 1 in the assembled position.

The two parts of the clamping member 8 are fixed as a unit in the tubular profile 1 with the ends continously bent and bevelled downwards so that the base of the lower clamping part 2, with at least one threaded part of the fastening element protruding, forms a surface for fitting to the roof of the transportation means, whilst the whole lower clamping part 2 is concealed from above by the tubular profile 1.

After inserting the upper clamping part 3 into the trough of the lower clamping part 2 and installing the mounting bolt 9 and the stretching bolt 5, this assembly is inserted into the bent end of the obliquely bevelled tubular profile 1 of the roof rail, and the bolts 15, 16 on the mounting bolt 9 and the stretching bolt 5 are tightened. The position of the clamping member 8 in the tubular profile 1 of the roof rail is thereby secured and the mounting unit is formed. On tightening the nut 16 on the stretching bolt 5 by means of a double-arm lever, the inner parts of the two parts 2, 3 of the clamping member 8 are braced against the inner walls of the tubular profile 1 of the roof rail adjacent to them. At the same time, by its shaping, part of the upper clamping part 3, through which the stretching bolt 5 passes, assures two functions. It makes possible the swivelling movement during tightening of the stretching bolt 5 and also secures the head 6 of this bolt 5 against twisting (the head 6 is in the shape of a cylindrical segment and its bearing surface is part of the cylindrical socket 13). The upper clamping part 3 and the lower clamping part 2 are shaped in such a way that they fit tightly, over the greatest possible surface, against the inner surface of the tubular profile of the roof rail.

After inserting the bolts 5, 9 of the above described mounting unit of the roof rail into the openings in the roof of the vehicle, from underneath, that is from the inner space of the vehicle, the nuts of these two bolts are tightened and the connection is secured against twisting.

Alternatively, the mounting unit of the roof rail can be attached to the vehicle by means of bolts which pass through the opening in the tubular profile 1 of the roof rail from above. The connection is then secured against release and the openings in the tubular profile 1 are covered by plastic head plates. This embodiment (Fig. 2) is designed for supplementary mounting of the roof rail to the vehicle. ln one of the possible examples of this alternative (Fig. 3), the stretching element consists of a stretching bolt 5 passing freely through the base of the outer end of the lower clamping part 2 so that its head is embedded in the base of the lower clamping part 2 and its theaded end is guided in the tapped hole in the upper clamping part 3, whilst the fastening means for firm mounting connection to the roof of the transport means consists of two mounting bolts 9, situated respectively to the sides of the stretching bolt 5, in whose axes are arranged the mounting through-openings in all the walls of the elements lying above them, that is of the upper clamping part 3, and of the tubular profile 1 where the openings can be furnished with caps.

### Industrial uses

The invention can be used as a lengthwise roof rail for transport means, particularly for cars and boats.

## Claims

1. A roof rail for attaching to a transport means, particularly to the roof of a car or boat, the basic element being a tubular profile (1), where each of its two ends is furnished with a fastening means for firm mounting connection to the roof of the transport means, **characterised in that** this fastening means is part of a clamping member (8) firmly positioned at least partly inside the tubular profile (1) and consisting of two lengthwise parts joined at one of their ends by a stretching element, with the possibility of mutual swivelling by means of the opening motion of their arms at the opposite ends, until these two arms are in a position where they are propped firmly, opposite each other, against the inner walls of the tubular profile (1).

2. A roof rail according to claim 1, **characterised in that** the two parts of the clamping member (8), the upper clamping part (3) and the lower clamping part (2), consist of U-shaped profiles, turned so that their bases lie opposite each other and one of the two parts (2, 3), i.e. the inner part, is positioned with its side walls in the trough of the other part, i.e. the outer part, where the two parts (2, 3) are furnished, roughly in the middle of their length, with a set of mutually rolling surfaces defining the place of the swivelling, whilst the junction of the two parts (2, 3) is situated at their ends which are designed for positioning in the tubular profile (1) in the direction of its open outer end.

3. A roof rail according to claim 2, **characterised in that** the rolling surfaces consist of the facing side walls of two rounded projections (4), and of the valley between them, formed in the base of the outer part, into which the correspondingly-shaped projections (7), formed on the side walls of the inner part, individually extend.

4. A roof rail according to claims 1 to 3, **characterised in that** the base of the upper clamping part (3) is furnished with an upwardly open socket (13) for the head (6) of the stretching bolt (5) forming the stretching element, which passes freely through the two parts (2, 3) and is furnished at its free end with a nut (16), whilst the junction of the two parts is furnished, in the stretched position of the two parts (2, 3), with an anti-release guard.

5. A roof rail according to claim 4, **characterised in that** the upper clamping part (3), in the area of its junction with the lower clamping part (2), is reduced in height at its end by means of an oblique surface (12) through which its base passes into an embedded rounded cylindrical surface arranged across this upper clamping part (3), which forms a socket (13) for the head (6) of the stretching bolt (5) of corresponding shape.

6. A roof rail according to claim 4 or 5, **characterised in that** the protruding threaded end of the stretching bolt (5) is used as the fastening means for the firm mounting connection to the roof of the transport means.

7. A roof rail according to claim 6, **characterised in that** a further mounting bolt (9) with nut (15), situated in the end area of the lower clamping part (2) beyond the stretching bolt (5) and beyond the end of the upper clamping part (3), freely passes through the base of the lower clamping part (2), in the direction of the open outer end of the tubular profile (1) in the assembled position.

8. A roof rail according to any of the preceeding claims 1 to 7, **characterised in that** the two parts of the clamping member (8) are fixed as a unit in the tubular profile (1) with the ends continously bent and bevelled downwards so that the base of the lower clamping part (2), with at least one threaded part of the fastening element protruding, forms a surface for fitting to the roof of the transportation means, whilst the whole lower clamping part (2) is concealed from above by the tubular profile (1).

9. A roof rail according to claim 1, 2, 6 or 7, **characterised in that** the stretching element consists of a stretching bolt (5) passing freely through the base of the outer end of the lower clamping part (2) so that its head is embedded in the base of the lower clamping part (2) and its threaded end is guided in the tapped hole in the upper clamping part (3), whilst the fastening means for firm mounting connection to the roof of the transport means consists of at least one mounting bolt (9), situated to the side of the stretching bolt (5), in whose axis are arranged the mounting through-openings in all the walls of the elements lying above them, that is of the upper clamping part (3), and of the tubular profile (1) where the openings can be furnished with caps.

10. A roof rail according to any of the preceeding claims 1 to 9, **characterised in that** the tubular profile (1) is made of an aluminium alloy or reinforced plastic, the lower clamping part (2) and the upper clamping part (3) are made of deep-drawing sheet steel, whilst the projections (4) are formed as bumps in the base of the lower clamping part (2).

11. A roof rail according to any of the preceeding claims 1 to 10, **characterised in that** at least one of the two parts of the clamping member (8), the upper clamping part (3) and/or the lower clamping part (2), has at least part of its outer surface in a shape corresponding to the inner surface of the tubular profile (1) in the places where they are adjacent to one another in the assembled position.

12. A roof rail according to any of the preceeding claims 1 to 11, **characterised in that** the tubular profile (1) has the same diameter along the whole of its length.
